# EUROPEAN PATENT APPLICATION

(11) **EP 4 694 225 A1**
(43) Date of publication of application: **11.02.2026**
(21) Application number: 23929084.4
(22) Date of filing: 24.03.2023
(51) Int. Cl.: H04W 4/50, H04L 67/12, H04L 41/16, H04L 67/63, H04L 41/0806

(54) **INFORMATION PROCESSING METHOD AND APPARATUS**

(71) Applicant: Beijing Xiaomi Mobile Software Co., Ltd., Beijing 100085 (CN)
(72) Inventor: CHEN, Dong, Beijing 100085 (CN); SUN, Yuze, Beijing 100085 (CN)
(74) Representative: Hersina, Günter
(86) International application number: PCT/CN2023/083842
(87) International publication number: WO 2024/197481

(57) **Abstract**

Embodiments of the present application relate to the technical field of communications, and disclose an information processing method and apparatus. The method, executed by a first network device, comprises: receiving a first computing service request sent by a terminal device by means of a second network device, wherein the first computing service request comprises the identifier of the terminal device and description information of a required computing service; according to the description information, determining the identifier of a required algorithm and resource information of the terminal device, wherein the resource information comprises a resource type and/or a resource quantity; according to the resource information, obtaining a first computing result by means of an algorithm associated with the identifier of the required algorithm; and sending a processing request to a third network device, the processing request comprising the identifier of the terminal device and the first computing result. Therefore, an independent computer service is provided for a terminal device by means of a first network device independently arranged in a network, and the performance of a communication system is improved.

## Description

### TECHNICAL FIELD

The disclosure relates to the field of communication technologies, and in particular to a method and an apparatus for information processing.

### BACKGROUND

The technologies, such as Artificial intelligence (AI) and machine learning (ML) technologies represented by deep learning and neural networks, will further empower communication systems, thus establishing a bidirectional relationship of AI for network and network for AI.

### SUMMARY

According to a first aspect of embodiments of the disclosure, a method for information processing is provided. The method is performed by a first network device, including: receiving a first calculation service request sent by a terminal via a second network device, in which the first calculation service request includes an identifier of the terminal and description information of a required calculation service; determining an identifier and resource information of a required algorithm of the terminal based on the description information, in which the resource information includes a resource type and/or a resource quantity; obtaining, based on the resource information, a first calculation result via an algorithm associated with the identifier of the required algorithm; and sending a processing request to a third network device, in which the processing request includes the identifier of the terminal and the first calculation result.

According to a second aspect of embodiments of the disclosure, a method for information processing is provided. The method is performed by a third network device, including: receiving a processing request sent by a first network device, in which the processing request includes an identifier of a terminal and a first calculation result, the processing request is configured to request at least one of: storing the first calculation result, or sending the first calculation result to the terminal; and processing the first calculation result.

According to a third aspect of embodiments of the disclosure, a method for information processing is provided. The method is performed by a terminal, including: sending a calculation service request to a first network device via a second network device, in which the first calculation service request includes an identifier of the terminal and description information of a required calculation service; and receiving, via the second network device, a calculation result sent by the first network device or a third network device, in which the calculation result is sent by the first network device to the third network device.

According to a fourth aspect of embodiments of the disclosure, a first network device is provided. The first network device includes: a transceiver module, configured to receive a first calculation service request sent by a terminal via a second network device, in which the first calculation service request includes an identifier of the terminal and description information of a required calculation service; and a processing module, configured to determine an identifier and resource information of a required algorithm of the terminal based on the description information, in which the resource information includes a resource type and/or a resource quantity, in which the processing module is further configured to obtain, based on the resource information, a first calculation result via an algorithm associated with the identifier of the required algorithm; and the transceiver module is further configured to send a processing request to a third network device, in which the processing request includes the identifier of the terminal and the first calculation result.

According to a fifth aspect of embodiments of the disclosure, a third network device is provided. The third network device includes: a transceiver module, configured to receive a processing request sent by a first network device, in which the processing request includes an identifier of a terminal and a first calculation result, the processing request is configured to request at least one of: storing the first calculation result, or sending the first calculation result to the terminal; and a processing module, configured to process the first calculation result.

According to a sixth aspect of embodiments of the disclosure, a terminal is provided. The terminal includes: a transceiver module, configured to send a calculation service request to a first network device via a second network device, in which the first calculation service request includes an identifier of the terminal and description information of a required calculation service, in which the transceiver module is further configured to receive, via the second network device, a calculation result sent by the first network device or a third network device, in which the calculation result is sent by the first network device to the third network device.

According to a seventh aspect of embodiments of the disclosure, a communication device is provided. The communication device includes a processor and a memory storing a computer program that, when executed by the processor, causes the communication device to implement the method for information processing according to the first aspect of embodiments.

According to an eighth aspect of embodiments of the disclosure, a communication device is provided. The communication device includes a processor and a memory storing a computer program that, when executed by the processor, causes the communication device to implement the method for information processing according to the second aspect of embodiments.

According to a ninth aspect of embodiments of the disclosure, a communication device is provided. The communication device includes a processor and a memory storing a computer program that, when executed by the processor, causes the communication device to implement the method for information processing according to the third aspect of embodiments.

According to a tenth aspect of embodiments of the disclosure, a communication device is provided. The communication device includes a processor and an interface circuit, in which the interface circuit is configured to receive code instructions and transmit the code instructions to the processor; and the processor is configured to execute the code instructions to implement the method for information processing according to the first aspect of embodiments.

According to an eleventh aspect of embodiments of the disclosure, a communication device is provided. The communication device includes a processor and an interface circuit, in which the interface circuit is configured to receive code instructions and transmit the code instructions to the processor; and the processor is configured to execute the code instructions to implement the method for information processing according to the second aspect of embodiments.

According to a twelfth aspect of embodiments of the disclosure, a communication device is provided. The communication device includes a processor and an interface circuit, in which the interface circuit is configured to receive code instructions and transmit the code instructions to the processor; and the processor is configured to execute the code instructions to implement the method for information processing according to the third aspect of embodiments.

According to a thirteenth aspect of embodiments of the disclosure, a communication system is provided. The communication system includes the communication device according to the fourth aspect to the sixth aspect, or includes the communication device according to the seventh aspect to the ninth aspect, or includes the communication device according to the tenth aspect to the twelfth aspect.

According to a fourteenth aspect of embodiments of the disclosure, a computer-readable storage medium is provided. The computer-readable storage medium storing instructions that, when executed, cause the method for information processing according to the first aspect of embodiments to be to be implemented.

According to a fifteenth aspect of embodiments of the disclosure, a computer-readable storage medium is provided. The computer-readable storage medium storing instructions that, when executed, cause the method for information processing according to the second aspect of embodiments to be to be implemented.

According to a sixteenth aspect of embodiments of the disclosure, a computer-readable storage medium is provided. The computer-readable storage medium storing instructions that, when executed, cause the method for information processing according to the third aspect of embodiments to be to be implemented.

According to a seventeenth aspect of embodiments of the disclosure, a computer program product is provided. When the computer program is running on a computer, the computer is caused to implement the method for information processing according to the first aspect of embodiments.

According to an eighteenth aspect of embodiments of the disclosure, a computer program product is provided. When the computer program is running on a computer, the computer is caused to implement the method for information processing according to the second aspect of embodiments.

According to a nineteenth aspect of embodiments of the disclosure, a computer program product is provided. When the computer program is running on a computer, the computer is caused to implement the method for information processing according to the third aspect of embodiments.

In the method and the apparatus for information processing provided in the embodiments of the disclosure, after receiving the first calculation service request sent by the terminal, the first network device may first determine the identifier and the resource information of the required algorithm of the terminal, then obtain, based on the resource information, the first calculation result via the algorithm associated with the identifier of the required algorithm, and send the first calculation result to the third network device. Thus, by using an independently deployed first network device within the network, independent calculation services are provided for the terminal, which improves the performance of the communication system.

Additional aspects and advantages of the disclosure will be set forth in part in the description which follows, and in part will be obvious from the description, or will be learned by practice of the disclosure.

### BRIEF DESCRIPTION OF THE DRAWINGS

In order to explain technical solutions in the embodiments of the disclosure or the related art more clearly, the figures described in the embodiments of the disclosure or required in the related art will be briefly introduced below.
FIG. 1 is a diagram illustrating an architecture of a communication system according to an embodiment of the disclosure.
FIG. 2 is a flow chart illustrating a method for information processing according to an embodiment of the disclosure.
FIG. 3 is a flow chart illustrating another method for information processing according to an embodiment of the disclosure.
FIG. 4 is a flow chart illustrating another method for information processing according to an embodiment of the disclosure.
FIG. 5 is a flow chart illustrating another method for information processing according to an embodiment of the disclosure.
FIG. 6 is a flow chart illustrating another method for information processing according to an embodiment of the disclosure.
FIG. 7 is a flow chart illustrating yet another method for information processing according to an embodiment of the disclosure.
FIG. 8 is a flow chart illustrating yet another method for information processing according to an embodiment of the disclosure.
FIG. 9 is a flow chart illustrating yet another method for information processing according to an embodiment of the disclosure.
FIG. 10 is a diagram illustrating an architecture of another communication system according to an embodiment of the disclosure.
FIG. 11 is a flow chart illustrating an interaction of another method for information processing according to an embodiment of the disclosure.
FIG. 12 is a block diagram illustrating an apparatus according to an embodiment of the disclosure.
FIG. 13 is a block diagram illustrating a communication device according to an embodiment of the disclosure.
FIG. 14 is a block diagram illustrating a chip according to an embodiment of the disclosure.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements, unless otherwise indicated. The implementations described in the following exemplary embodiments do not represent all implementations consistent with embodiments of the disclosure. Rather, they are merely examples of devices and methods consistent with some aspects of embodiments of the disclosure as recited in the appended claims.

Terms used in the embodiments of the disclosure are for the purpose of describing specific embodiments only, and are not intended to limit the embodiments of the disclosure. As used in the embodiments of the disclosure and the appended claims, the singular forms "a/an" and "the" are also intended to include the plural forms, unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used here may be interpreted as "in a case that" or "when" or "in response to a determination".

Embodiments of the disclosure are described in detail below, and examples of the embodiments are illustrated in the accompanying figures, throughout which the same or similar symbols indicate the same or similar elements. The embodiments described below with reference to the accompanying figures are exemplary and are intended to be used to explain the disclosure and are not to be construed as a limitation of the disclosure.

In order to better understand the method for information processing in embodiments of the disclosure, a communication system to which the embodiments of the disclosure are applicable is described below.

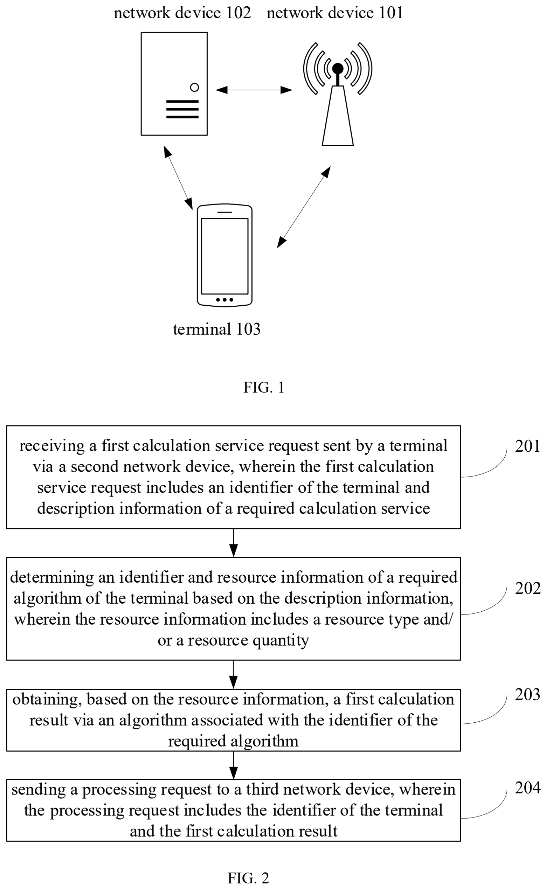

FIG. 1 is a diagram illustrating an architecture of a communication system according to an embodiment of the disclosure. The communication system may include, but is not limited to, one network device and one terminal. The number and forms of the devices illustrated in FIG. 1 are only for example and do not constitute a limitation to embodiments of the disclosure, and two or more network devices and two or more terminals may be included in practical applications. The communication system as illustrated in FIG. 1 includes two network devices 101 and 102, and one terminal 103 for example.

It needs to be noted that the technical solution in embodiments of the disclosure is applicable to various communication systems, for example, a long term evolution (LTE) system, a 5th generation (5G) mobile communication system, a 5G new radio (NR) system or other future new mobile communication systems. The network device 101 in embodiments of the disclosure is an entity, at a network side, for transmitting or receiving a signal. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The network device 102 may be a core network device, such as an access and mobility management function (AMF) network element, a user plane function (UPF) network element, and so on.

A specific technology and a specific device form adopted by the network device are not limited in embodiments of the disclosure. The network device according to embodiments of the disclosure may consist of a central unit (CU) and a distributed unit (DU). The CU may also be referred to as a control unit. The protocol layers of a network device such as a base station may be split by using a structure of the CU-DU, so that the functions for a part of the protocol layers are placed in the CU for centralized control, and functions of a remaining part or all of the protocol layers are distributed in the DU, and the DU is centrally controlled by the CU.

The terminal 103 in embodiments of the disclosure is an entity, at a user side, for receiving or transmitting a signal, for example, a mobile phone. The terminal may be referred to as a user equipment (UE), a mobile station (MS), a mobile terminal (MT), etc. The terminal may be a device with a communication function, such as a vehicle, a smart vehicle, a mobile phone, an Internet of Things device, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. A specific technology adopted by the terminal and a specific device form adopted by the terminal are not limited in embodiments of the disclosure.

It may be understood that, the communication system described in embodiments of the disclosure is intended to explain technical solutions of embodiments of the disclosure more clearly, and does not constitute a limitation to the technical solutions according to embodiments of the disclosure. Those skilled in the art know that, with evolution of a system architecture and emergence of a new business scenario, the technical solutions according to embodiments of the disclosure are also applied to similar technical problems.

In a service-based architecture (SBA) of the related art, a network data analytics function (NWDAF) provides analysis services for network function (NF) network elements, application function (AF) network elements and etc., in the core network. It may not only analyze past information but also predict future network states and information to improve network performance. The NWDAF may use a service-based interface to expose data analysis results to any NF. However, the NWDAF cannot provide calculation services.

Based on the above analysis, a communication system capable of providing calculation services may further improve the network performance.

It needs to be noted that, in embodiments of the disclosure, the first network device is a network device in the communication system configured to provide calculation services. Its name in the communication system may be determined by its achievable functions, for example, its name may be a calculation function network element, or may be any other name that may distinguish it from other network elements, which is not limited in the disclosure. The second network device is a device in the communication system configured to assist the terminal in communicating with the core network device. There may be one or more second network devices. For example, the second network device may include a radio access network (RAN) device and an AMF. The third network device is a network device in the communication system configured to provide storage functions. Its name in the communication system may be determined by its achievable functions, for example, its name may be a storage network element, or may be any other name that may distinguish it from other network elements, which is not limited in the disclosure. The fourth network device is a network device configured to store and provide algorithms for network elements in the communication system, such as a data network (DN) device.

The method and apparatus for information processing in the disclosure are further described in combination with the attached figures.

FIG. 2 is a flow chart illustrating a method for information processing according to an embodiment of the disclosure. It needs to be noted that the method for information processing in embodiments of the disclosure is performed by a first network device. The method may be performed independently or may be performed in conjunction with any other embodiments of the disclosure. As shown in FIG. 2, the method may include the following steps 201 to 204.

It needs to be noted that, in embodiments of the disclosure, intermediate devices may be omitted in the description, with only limiting the sending device and receiving device. However, those skilled in the art may understand that such description does not necessarily mean that the sending device must directly send to the receiving device.

At step 201, a first calculation service request sent by a terminal is received via a second network device, in which the first calculation service request includes an identifier (ID) of the terminal and description information of a required calculation service.

In this embodiment of the disclosure, the first network device may be a calculation function network element. The calculation function network element is a new network element located in the core network, which may be configured to implement calculation-related functions and provide calculation services for the terminal or other network devices. It needs to be noted that the calculation function network element may be either a physical device or a software-implemented function running on a physical device, which is not limited in the embodiments of the disclosure.

The second network device is a device in the communication system configured to assist the terminal in communicating with the core network device. In the embodiments of the disclosure, when the first network device provides calculation services for the terminal, the second network device may include an RAN device and an AMF. That is, in the embodiments of the disclosure, the first network device communicates with the terminal via the AMF and the RAN. The RAN is an access network device of a serving cell where the terminal is located.

The description information of the calculation service is configured to describe a type and a requirement of the algorithm required by the terminal. For example, if the terminal requires the first network device to identify people and buildings included in an image, the description information of the calculation service may be: image recognition, people and buildings. Alternatively, if the terminal requires the first network device to identify people included in an image with an accuracy greater than 95%, the description information of the calculation service may be: image recognition, people, accuracy greater than 95%. It needs to be noted that the specific implementation form of the description information of the calculation service described above is merely illustrative and may be any form of information that may assist the first network device in determining a specific algorithm required by the terminal.

In some possible implementations, the first calculation service request may further include a first service ID. The first service ID may be any ID that may assist the first network device and the terminal in uniquely identifying/positioning/indicating the first calculation service request. Alternatively, the first service ID may be any ID that may assist the first network device in uniquely identifying the first calculation service request in combination with the ID of the terminal.

Optionally, the first service ID may be generated by the terminal or the second network device, which is not limited in the disclosure.

At step 202, an ID and resource information of a required algorithm of the terminal are determined based on the description information, in which the resource information includes a resource type and/or a resource quantity.

The ID of the algorithm may be any ID that may uniquely identify the specific algorithm required by the terminal. The resource type may be any type label used to distinguish capabilities of different computing resources. For example, based on different processing capabilities, resources may be classified into different types such as central processing unit (CPU) resources and graphics processing unit (GPU) resources.

In this embodiment of the disclosure, considering that different algorithms require different resource types and/or resource quantities, thus, after receiving the first calculation service request, the first network device may first determine the ID of the algorithm required by the terminal, and the required resource type, resource quantity, and other information based on the description information of the calculation service required by the terminal.

At step 203, a first calculation result is obtained based on the resource information via an algorithm associated with the ID of the required algorithm.

The algorithm associated with the ID of the required algorithm may be a model, an operational formula, or code instructions that may be recognized and executed by the first network device, which is not limited in the disclosure.

In this embodiment of the disclosure, after determining the ID and the resource information of the required algorithm, the first network device may perform resource scheduling based on the required resource information and obtain the first calculation result by executing the algorithm associated with the ID of the required algorithm based on the scheduled resources.

It needs to be noted that the resources scheduled by the first network device may be resources within the first network device or resources in other devices not located in the same physical device as the first network device, which is not limited in the disclosure.

At step 204, a processing request is sent to a third network device, in which the processing request includes the ID of the terminal and the first calculation result.

In this embodiment of the disclosure, the third network device may be a storage function network element. The storage function network element is a new network element located in the core network, which may be configured to implement storage-related functions and provide storage services for the terminal or other network devices. It needs to be noted that the storage function network element may be either a physical device or a software-implemented function running on a physical device, which is not limited in the embodiments of the disclosure.

It needs to be noted that the first network device may send the processing request to the third network device via a user plane.

In this embodiment of the disclosure, after obtaining the first calculation result, the first network device may send the first calculation result to the third network device, thus storing the first calculation result at the third network device.

Optionally, the processing request is configured to request at least one of: storing the first calculation result, or sending the first calculation result to the terminal.

In this case, after obtaining the first calculation result, the first network device may also request the third network device to send the first calculation result to the terminal by sending a processing request to the third network device.

In some possible implementations, the processing request may further include a first service ID. The first service ID may be any ID that may assist the first network device and the third network device in uniquely identifying the first calculation service request. Alternatively, the first service ID may be any ID that may assist the first network device and the third network device in uniquely identifying the first calculation service request in combination with the ID of the terminal.

Optionally, the first service ID in the processing request may be carried in the first calculation service request or generated by the first network device, which is not limited in the disclosure.

In some possible implementations, the first network device may also send the first calculation result to the terminal via the second network device. That is, after obtaining the first calculation result, the first network device may send the first calculation result to both the terminal and the third network device; or, may send the first calculation result only to the third network device and request the third network device to send the first calculation result to the terminal, which is not limited in the disclosure.

In some possible implementations, if the data to be calculated in the first calculation service request is large or the calculation process of the algorithm is complex, the first calculation result may consist of a plurality of sets of data. For example, if the first calculation service request is requesting for the first network device to calculate a mean square error of each data set among tens of thousands of data sets, that is, the first calculation result may include tens of thousands of mean square errors. In this case, the first network device may perform batch calculations on the tens of thousands of data sets. After the calculation of each batch of data is completed, the currently obtained partial first calculation result is sent to the third network device to request the third network device to temporarily store this partial first calculation result. After all parts of the first calculation result are obtained, all parts of the first calculation results are stored in an associated manner and simultaneously sent to the terminal.

In summary, after receiving the first calculation service request sent by the terminal, the first network device may first determine the ID and the resource information of the required algorithm of the terminal, then obtain, based on the resource information, the first calculation result via the algorithm associated with the ID of the required algorithm, and send the first calculation result to the third network device. Thus, by using the independently deployed first network device within the network, independent calculation services are provided for the terminal, which improves the performance of the communication system.

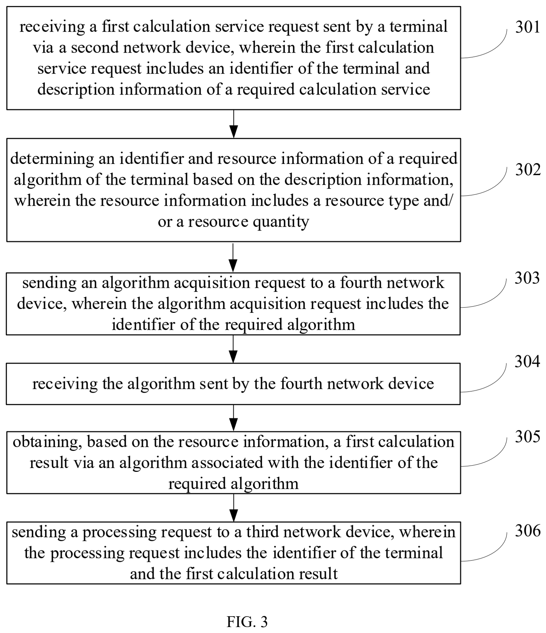

FIG. 3 is a flow chart illustrating a method for information processing according to an embodiment of the disclosure. It needs to be noted that the method for information processing in embodiments of the disclosure is performed by a first network device. The method may be performed independently or may be performed in conjunction with any other embodiments of the disclosure. As shown in FIG. 3, the method may include the following steps 301 to 306.

It needs to be noted that, in embodiments of the disclosure, intermediate devices may be omitted in the description, with only limiting the sending device and receiving device. However, those skilled in the art may understand that such description does not necessarily mean that the sending device must directly send to the receiving device.

At step 301, a first calculation service request sent by a terminal is received via a second network device, in which the first calculation service request includes an ID of the terminal and description information of a required calculation service.

At step 302, an ID and resource information of a required algorithm of the terminal are determined based on the description information, in which the resource information includes a resource type and/or a resource quantity.

In this embodiment of the disclosure, steps 301 to 302 may be implemented in any method described in other embodiments of the disclosure, which is not limited in this embodiment of the disclosure and will not be repeated here.

At step 303, an algorithm acquisition request is sent to a fourth network device, in which the algorithm acquisition request includes the ID of the required algorithm.

At step 304, the algorithm sent by the fourth network device is received.

In the embodiments of the disclosure, the first network device may not include the specific algorithm associated with the ID of the algorithm. Thus, the first network device may send the algorithm acquisition request to the fourth network device, such as a DN network element, to obtain the corresponding algorithm from the fourth network device.

Optionally, if the fourth network device is a DN network element, the first network device may send the algorithm acquisition request to the fourth network device via a gateway (GW), and receive the algorithm sent by the fourth network device via the gateway.

At step 305, a first calculation result is obtained based on the resource information via an algorithm associated with the ID of the required algorithm.

At step 306, a processing request is sent to a third network device, in which the processing request includes the ID of the terminal and the first calculation result.

The above steps 305 to 306 may be implemented in any method described in other embodiments of the disclosure, which is not limited in this embodiment of the disclosure and will not be repeated here.

In summary, after receiving the first calculation service request sent by the terminal, the first network device may first determine the ID and the resource information of the required algorithm of the terminal, then obtain the algorithm associated with the ID of the required algorithm from the fourth network device, then obtain, based on the resource information, the first calculation result via the algorithm associated with the ID of the required algorithm, and finally send the first calculation result to the third network device. Thus, the independently deployed first network device may provide various required calculation services for the terminal by obtaining the required algorithm from the fourth network device, which further improves the performance of the communication system.

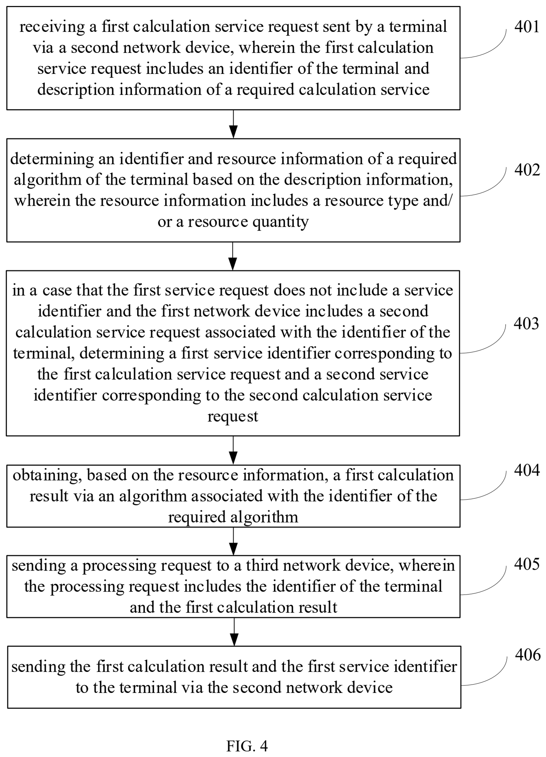

FIG. 4 is a flow chart illustrating a method for information processing according to an embodiment of the disclosure. It needs to be noted that the method for information processing in embodiments of the disclosure is performed by a first network device. The method may be performed independently or may be performed in conjunction with any other embodiments of the disclosure. As shown in FIG. 4, the method may include the following steps 401 to 406.

It needs to be noted that, in embodiments of the disclosure, intermediate devices may be omitted in the description, with only limiting the sending device and receiving device. However, those skilled in the art may understand that such description does not necessarily mean that the sending device must directly send to the receiving device.

At step 401, a first calculation service request sent by a terminal is received via a second network device, in which the first calculation service request includes an ID of the terminal and description information of a required calculation service.

At step 402, an ID and resource information of a required algorithm of the terminal are determined based on the description information, in which the resource information includes a resource type and/or a resource quantity.

At step 403, in a case that the first service request does not include a service ID and the first network device includes a second calculation service request associated with the ID of the terminal, a first service ID corresponding to the first calculation service request and a second service ID corresponding to the second calculation service request are determined.

In the embodiments of the disclosure, if the first network device further includes the second calculation service request associated with the ID of the terminal. That is, the first network device needs to simultaneously process two calculation service requests sent by the terminal. In this case, to facilitate the first network device in accurately distinguishing the algorithms and resource information required for the two service requests from the terminal, in the case that the first service request does not include the service ID, the first network device may assign (or generate) a corresponding service ID for each of the two calculation service requests.

In some possible implementations, the first service ID and the second service ID determined by the first network device may be any ID information that may assist the first network device in distinguishing the calculation service request from other calculation service requests. That is, different calculation service requests in the first network device correspond to different service IDs.

In some possible implementations, the first service ID and the second service ID may also be any ID information that may cause the first network device to distinguish the calculation service request from other calculation service requests, in combination with the ID of the terminal. That is, different calculation service requests corresponding to the same terminal in the first network device have different service IDs, and calculation service requests corresponding to different terminals may have different or identical service IDs.

It needs to be noted that the above step 403 may be performed after the step 402, before the step 402, or simultaneously with the step 402, which is not limited in the disclosure.

At step 404, a first calculation result is obtained based on the resource information via an algorithm associated with the ID of the required algorithm.

It needs to be noted that the above step 403 may be performed before the step 404, after the step 404, or simultaneously with the step 404, which is not limited in the disclosure.

At step 405, a processing request is sent to a third network device, in which the processing request includes the ID of the terminal, the first calculation result, and the first service ID.

At step 406, the first calculation result and the first service ID are sent to the terminal via the second network device.

For specific implementations of the above steps 404 to 406, reference may be made to the detailed descriptions in other embodiments of the disclosure, which will not be repeated here.

In some possible implementations, the first network device may not perform the above step 406 but instead request the third network device to send the first calculation result and the first service ID to the terminal via the processing request, which is not limited in the disclosure.

It needs to be noted that after obtaining the second calculation result corresponding to the second calculation service request, the first network device may also send the second calculation result and the second service ID to the third network device and the terminal respectively. This process will not be repeated in the disclosure.

In summary, after receiving the first calculation service request sent by the terminal, the first network device may first determine the ID and the resource information of the required algorithm of the terminal. In the case that the first calculation service request does not include the service ID and the first network device further includes the second calculation service request associated with the ID of the terminal, the first network device respectively generates the first service ID corresponding to the first calculation service request and the second service ID corresponding to the second calculation service request. Then, the first network device obtains, based on the resource information, the first calculation result via the algorithm associated with the ID of the required algorithm, and finally sends the first calculation result and the first service ID to the third network device. Thus, by using the independently deployed first network device and third network device, calculation services and calculation result storage services are respectively provided for the terminal, and the first network device may also assign corresponding service IDs for calculation services, which further improves the performance of the communication system.

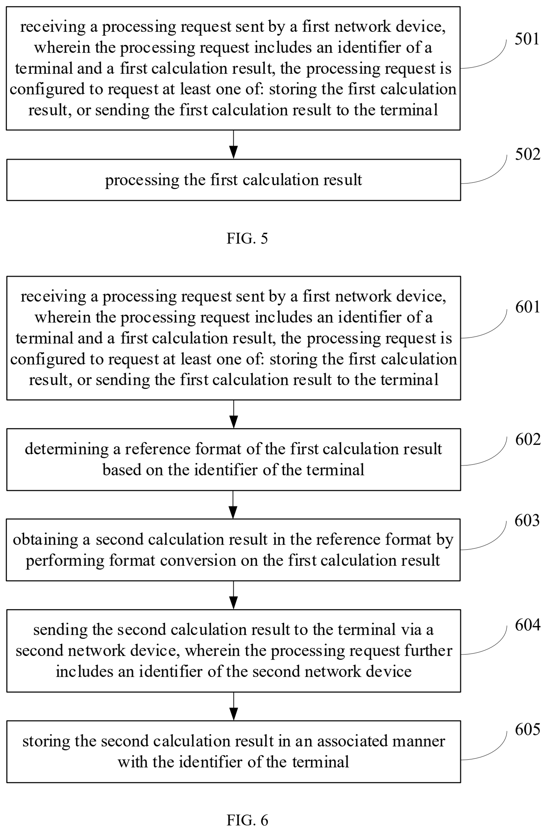

FIG. 5 is a flow chart illustrating a method for information processing according to an embodiment of the disclosure. It needs to be noted that the method for information processing in embodiments of the disclosure is performed by a third network device. The method may be performed independently or may be performed in conjunction with any other embodiments of the disclosure. As shown in FIG. 5, the method may include the following steps 501 to 502.

It needs to be noted that, in embodiments of the disclosure, intermediate devices may be omitted in the description, with only limiting the sending device and receiving device. However, those skilled in the art may understand that such description does not necessarily mean that the sending device must directly send to the receiving device.

At step 501, a processing request sent by a first network device is received, in which the processing request includes an ID of a terminal and a first calculation result, the processing request is configured to request at least one of: storing the first calculation result, or sending the first calculation result to the terminal.

In this embodiment of the disclosure, the first network device may be a calculation function network element. The calculation function network element is a new network element located in the core network, which may be configured to implement calculation-related functions and provide calculation services for the terminal or other network devices. It needs to be noted that the calculation function network element may be either a physical device or a software-implemented function running on a physical device, which is not limited in the embodiments of the disclosure.

The third network device may be a storage function network element. The storage function network element is a new network element located in the core network, which may be configured to implement storage-related functions and provide storage services for the terminal or other network devices. It needs to be noted that the storage function network element may be either a physical device or a software-implemented function running on a physical device, which is not limited in the embodiments of the disclosure. In some possible implementations, the third network device may receive the processing request sent by the first network device via a user plane.

At step 502, the first calculation result is processed.

In some possible implementations, after receiving the first calculation result, the third network device may store the first calculation result in an associated manner with the ID of the terminal, for facilitating subsequent queries by the terminal or other network devices.

In some possible implementations, in the case that the first calculation result received by the third network device is sent by the first network device for a plurality of times in sequence, the third network device may also integrate (e.g., concatenate) the data received for the plurality of times to generate a complete first calculation result, and then store the complete first calculation result in an associated manner with the ID of the terminal.

In some possible implementations, the third network device may also send the first calculation result to the terminal.

For example, the third network device may send the first calculation result to the terminal via a second network device, in which the processing request further includes an ID of the second network device.

That is, in the case that the first network device sends the first calculation result to the third network device, the first network device may also simultaneously send the ID of the second network device to the third network device. Then, the third network device may send the first calculation result to the terminal via the second network device.

In the embodiments of the disclosure, the second network device is a device in the communication system configured to assist the terminal in communicating with the core network device. In the embodiments of the disclosure, when the first network device provides calculation services for the terminal, the second network device may include an RAN device and an AMF. That is, in the embodiments of the disclosure, the first network device communicates with the terminal via the AMF and the RAN. The RAN is an access network device of a serving cell where the terminal is located.

In some possible implementations, the third network device may also receive an indication message sent by the terminal via the second network device, in which the indication message indicates that the terminal has obtained the first calculation result.

In some possible implementations, after receiving the indication message, the third network device may also send processing feedback information to the first network device, in which the processing feedback information indicates the first network device that the terminal has obtained the first calculation result.

In some possible implementations, the processing request further includes a first service ID, so that the third network device may store the first calculation result in an associated manner with the first service ID and the ID of the terminal, and send the first service ID and the first calculation result to the terminal.

In summary, after receiving the processing request sent by the first network device, the third network device may store the first calculation result sent by the first network device, and/or send the first calculation result to the terminal. Thus, by using the independently deployed third network device within the network, independent storage services of the calculation results are provided for the terminal, which improves the performance of the communication system.

FIG. 6 is a flow chart illustrating a method for information processing according to an embodiment of the disclosure. It needs to be noted that the method for information processing in embodiments of the disclosure is performed by a third network device. The method may be performed independently or may be performed in conjunction with any other embodiments of the disclosure. As shown in FIG. 6, the method may include the following steps 601 to 605.

It needs to be noted that, in embodiments of the disclosure, intermediate devices may be omitted in the description, with only limiting the sending device and receiving device. However, those skilled in the art may understand that such description does not necessarily mean that the sending device must directly send to the receiving device.

At step 601, a processing request sent by a first network device is received, in which the processing request includes an ID of a terminal and a first calculation result, the processing request is configured to request at least one of: storing the first calculation result, or sending the first calculation result to the terminal.

For specific implementations of the above step 601, reference may be made to the detailed descriptions in other embodiments of the disclosure, which will not be repeated here.

At step 602, a reference format of the first calculation result is determined based on the ID of the terminal.

The reference format corresponding to IDs of different terminals may be determined by the third network device based on a protocol, pre-configured in the third network device, or sent by the terminal to the third network device, which is not limited in the disclosure.

At step 603, a second calculation result in the reference format is obtained by performing format conversion on the first calculation result.

In the embodiments of the disclosure, considering that different types of terminals may have different format requirements for files, after receiving the processing request, the third network device may determine the reference format based on the ID of the terminal. Then, the third network device converts, based on the reference format, the first calculation result into the second calculation result in the reference format.

For example, in the case that the third network device determines, based on the ID of the terminal, that the terminal is a mobile terminal device and its corresponding reference format is portable document format (PDF), the third network device may convert the first calculation result into the second calculation result in a PDF format.

At step 604, the second calculation result is sent to the terminal via a second network device, in which the processing request further includes an ID of the second network device.

At step 605, the second calculation result is stored in an associated manner with the ID of the terminal.

For specific implementations of the above steps 604 to 605, reference may be made to the detailed descriptions in other embodiments of the disclosure, which will not be repeated here.

It needs to be noted that the above step 604 may be performed after the step 605, or simultaneously with the step 605, which is not limited in the disclosure.

In summary, after receiving the processing request sent by the first network device, the third network device first determines the reference format based on the ID of the terminal, then converts the first calculation result into the second calculation result in the reference format, then stores the second calculation result in the associated manner with the ID of the terminal, and simultaneously sends the second calculation result to the terminal. Thus, by using the independently deployed third network device within the network, independent format processing and storage services of the calculation results are provided for the terminal, thus further improves the performance of the communication system.

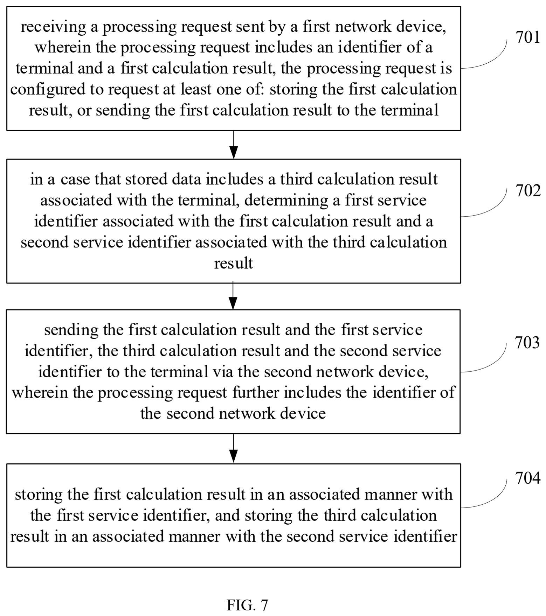

FIG. 7 is a flow chart illustrating a method for information processing according to an embodiment of the disclosure. It needs to be noted that the method for information processing in embodiments of the disclosure is performed by a third network device. The method may be performed independently or may be performed in conjunction with any other embodiments of the disclosure. As shown in FIG. 7, the method may include the following steps 701 to 704.

It needs to be noted that, in embodiments of the disclosure, intermediate devices may be omitted in the description, with only limiting the sending device and receiving device. However, those skilled in the art may understand that such description does not necessarily mean that the sending device must directly send to the receiving device.

At step 701, a processing request sent by a first network device is received, in which the processing request includes an ID of a terminal and a first calculation result, the processing request is configured to request at least one of: storing the first calculation result, or sending the first calculation result to the terminal.

At step 702, in a case that stored data includes a third calculation result associated with the terminal, a first service ID associated with the first calculation result and a second service ID associated with the third calculation result are determined.

In the disclosure, in a case that the third network device, after receiving the first calculation result, determines that its stored data includes the third calculation result associated with the terminal, in order to distinguish the first calculation result from the third calculation result, the third network device may generate (or assign) different service IDs for the first calculation result and the third calculation result respectively.

In some possible implementations, the first service ID and the second service ID may be any ID information that may assist the third network device in distinguishing the first calculation result from the third calculation result. That is, different calculation results in the third network device correspond to different service IDs.

In some possible implementations, the first service ID and the second service ID may also be any ID information that may cause the third network device to distinguish the first calculation result from the third calculation result, in combination with the ID of the terminal. That is, different calculation results corresponding to the same terminal in the third network device have different service IDs, and calculation results corresponding to different terminals may have different or identical service IDs.

At step 703, the first calculation result and the first service ID, the third calculation result and the second service ID are sent to the terminal via the second network device, in which the processing request further includes the ID of the second network device.

For specific implementations of the second network device, reference may be made to detailed descriptions in other embodiments of the disclosure, which will not be repeated here.

In the embodiments of the disclosure, after determining the corresponding first service ID for the first calculation result and second service ID for the third calculation result respectively, the third network device may send each calculation result in an associated manner with its corresponding service ID to the terminal via the second network device.

At step 704, the first calculation result is stored in an associated manner with the first service ID, and the third calculation result is stored in an associated manner with the second service ID.

In some possible implementations, if service IDs corresponding to calculation results associated with different terminals may be identical, then when storing the first calculation result and the third calculation result, the third network device also needs to store the ID of their associated terminal.

In summary, after receiving the processing request sent by the first network device, in the case that the third network device has stored the third calculation result associated with the ID of the terminal, the third network device first determines the first service ID corresponding to the first calculation result and the second service ID corresponding to the third calculation result respectively. Then, the third network device stores the first calculation result in the associated manner with the first service ID and stores the third calculation result in the associated manner with the second service ID, and simultaneously sends the first calculation result in the associated manner with the first service ID, and the third calculation result in the associated manner with the second service ID to the terminal. Thus, by using the independently deployed third network device within the network, independent differentiated identification and storage services of the calculation results are provided for the terminal, thus further improves the performance of the communication system.

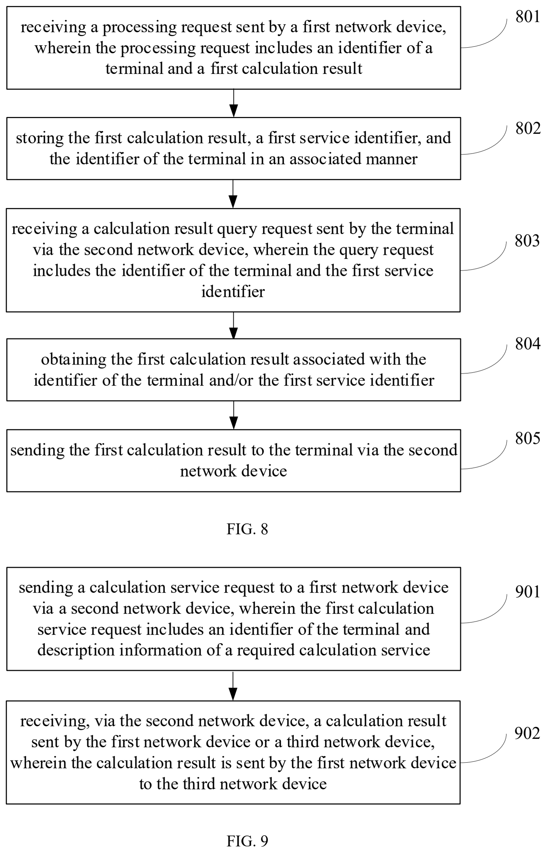

FIG. 8 is a flow chart illustrating a method for information processing according to an embodiment of the disclosure. It needs to be noted that the method for information processing in embodiments of the disclosure is performed by a third network device. The method may be performed independently or may be performed in conjunction with any other embodiments of the disclosure. As shown in FIG. 8, the method may include the following steps 801 to 805.

It needs to be noted that, in embodiments of the disclosure, intermediate devices may be omitted in the description, with only limiting the sending device and receiving device. However, those skilled in the art may understand that such description does not necessarily mean that the sending device must directly send to the receiving device.

At step 801, a processing request sent by a first network device is received, in which the processing request includes an ID of a terminal, a first service ID, and a first calculation result.

At step 802, the first calculation result, the first service ID, and the ID of the terminal are stored in an associated manner.

For specific implementations of the above steps 801 and 802, reference may be made to detailed descriptions in other embodiments of the disclosure, which will not be repeated here.

In some possible implementations, after receiving the first calculation result and the first service ID, the third network device may also send the first calculation result and the first service ID to the terminal via a second network device.

At step 803, a calculation result query request sent by the terminal via the second network device is received, in which the query request includes the ID of the terminal and the first service ID.

For specific implementations of the second network device, reference may be made to detailed descriptions in other embodiments of the disclosure, which will not be repeated here.

In some possible implementations, the first service ID may be generated by the third network device and then sent to the terminal, carried in the first calculation service request sent by the terminal, or generated by the first network device, which is not limited in the disclosure.

At step 804, the first calculation result associated with the ID of the terminal and/or the first service ID is obtained.

At step 805, the first calculation result is sent to the terminal via the second network device.

In the disclosure, after receiving the calculation result query request, the third network device may query a local database based on the ID of the terminal and/or the first service ID, and after finding the first calculation result, send the first calculation result to the terminal.

In some possible implementations, the third network device may find the first calculation result based only on the ID of the terminal, or based only on the first service ID, or based on both the ID of the terminal and the first service ID.

In some possible implementations, in a case that the storage space of the third network device is limited, the third network device may periodically delete stored calculation results based on a storage duration. For example, every other month, the third network device may delete calculation results stored for more than 3 months; or the third network device may delete a calculation result with a query count or a query frequency below a threshold, which is not limited in the disclosure.

In summary, after receiving the processing request sent by the first network device, the third network device may store the first calculation result, the ID of the terminal, and the first service ID in the associated manner. Then, after receiving the calculation result query request sent by the terminal, the third network device may query and return the first calculation result to the terminal. Thus, by using the independently deployed third network device within the network, independent storage and query services of the calculation results are provided for the terminal, thus further improves the performance of the communication system.

FIG. 9 is a flow chart illustrating a method for information processing according to an embodiment of the disclosure. It needs to be noted that the method for information processing in embodiments of the disclosure is performed by a terminal. The method may be performed independently or may be performed in conjunction with any other embodiments of the disclosure. As shown in FIG. 9, the method may include the following steps 901 to 902.

It needs to be noted that, in embodiments of the disclosure, intermediate devices may be omitted in the description, with only limiting the sending device and receiving device. However, those skilled in the art may understand that such description does not necessarily mean that the sending device must directly send to the receiving device.

At step 901, a calculation service request is sent to a first network device via a second network device, in which the first calculation service request includes an ID of the terminal and description information of a required calculation service.

**In** this embodiment of the disclosure, the first network device may be a calculation function network element. The calculation function network element is a new network element located in the core network, which may be configured to implement calculation-related functions and provide calculation services for the terminal or other network devices. It needs to be noted that the calculation function network element may be either a physical device or a software-implemented function running on a physical device, which is not limited in the embodiments of the disclosure.

The second network device is a device in the communication system configured to assist the terminal in communicating with the core network device. In the embodiments of the disclosure, when the first network device provides calculation services for the terminal, the second network device may include an RAN device and an AMF. That is, in the embodiments of the disclosure, the first network device communicates with the terminal via the AMF and the RAN. The RAN is an access network device of a serving cell where the terminal is located.

The description information of the calculation service is configured to describe a type and a requirement of the algorithm required by the terminal. For example, if the terminal requires the first network device to identify people and buildings included in an image, the description information of the calculation service may be: image recognition, people and buildings. Alternatively, if the terminal requires the first network device to identify people included in an image with an accuracy greater than 95%, the description information of the calculation service may be: image recognition, people, accuracy greater than 95%. It needs to be noted that the specific implementation form of the description information of the calculation service described above is merely illustrative and may be any form of information that may assist the first network device in determining a specific algorithm required by the terminal.

In some possible implementations, since the terminal may send a plurality of calculation service requests to the first network device, in order to distinguish between different calculation service requests, the calculation service request may further include a service ID. The service ID may be any ID that may assist the first network device and the terminal in uniquely identifying the first calculation service request. Alternatively, the first service ID may be any ID that may assist the first network device in uniquely identifying the first calculation service request in combination with the ID of the terminal.

Optionally, the service ID may be generated by the terminal or the second network device, which is not limited in the disclosure.

At step 902, a calculation result sent by the first network device or a third network device is received via the second network device, in which the calculation result is sent by the first network device to the third network device.

In this embodiment of the disclosure, the third network device may be a storage function network element. The storage function network element is a new network element located in the core network, which may be configured to implement storage-related functions and provide storage services for the terminal or other network devices. It needs to be noted that the storage function network element may be either a physical device or a software-implemented function running on a physical device, which is not limited in the embodiments of the disclosure.

In some possible implementations, in the case that the terminal receives the calculation result, the terminal may also receive, via the second network device, a service ID associated with the calculation result sent by the first network device or the third network device.

The service ID may be included in the calculation service request sent by the terminal, generated by the first network device, or generated by the third network device. For specific implementations, reference may be made to the detailed descriptions in other embodiments of the disclosure, which will not be repeated here.

In some possible implementations, the calculation result may be stored at the third network device for a period of time. In the case that the terminal needs the calculation result, the terminal may obtain the required calculation result by sending a calculation result query request to the third network device based on the ID of the terminal and the service ID.

In summary, the terminal first sends the calculation service request to the first network device via the second network device, and then receives, via the second network device, the calculation result sent by the first network device or the third network device. Thus, by using the independently deployed first network device and the third network device within the network, independent calculation services are provided for the terminal, which improves the performance of the communication system.

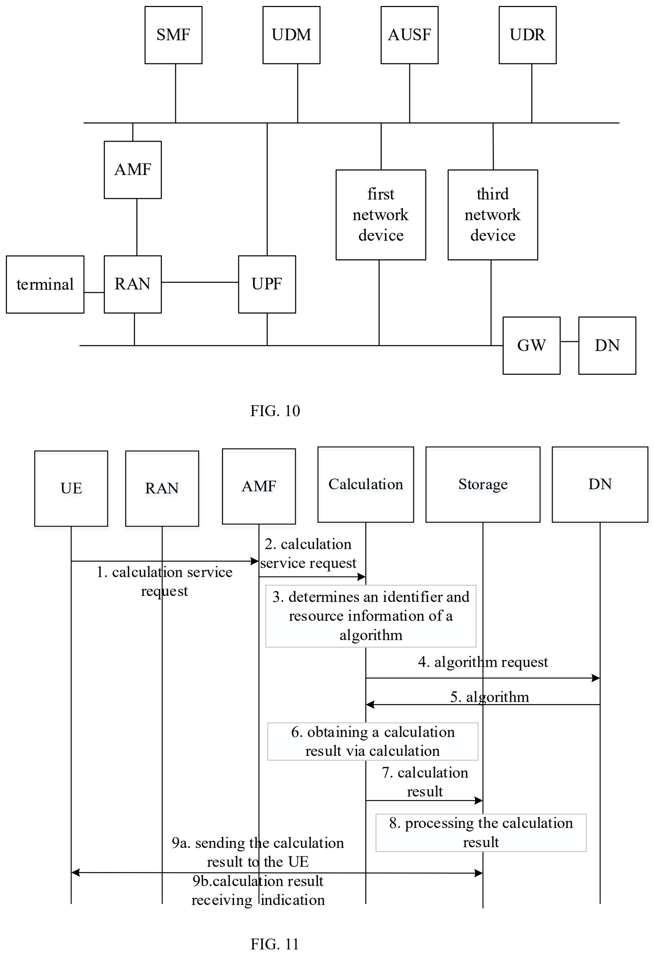

As an example, in any embodiment of the disclosure, the architecture of the communication system involved in the disclosure may refer to FIG. 10. FIG. 10 is a diagram illustrating an architecture of another communication system according to an embodiment of the disclosure. As shown in FIG. 10, a calculation network element and a storage network element are simultaneously connected to both a control plane and a user plane of the core network, and may perform data interaction with various network elements via a UPF, and perform instruction interaction is performed via the control plane.

The terminal in the above embodiments of the disclosure corresponds to the terminal in FIG. 10. The first network device in the above embodiments of the disclosure corresponds to the calculation network element in FIG. 10. The second network device includes the RAN and AMF in FIG. 10. The third network device corresponds to the storage network element in FIG. 10.

Further, as shown in FIG. 10, the communication system also includes a session management function (SMF) network element, a unified data management (UDM) network element, an authentication server function (AUSF) network element, a user data repository (UDR) network element, a network repository function (NRF) network element, a policy control function (PCF) network element, an AF network element, a network exposure function (NEF) network element, and so on.

As an example, in any embodiment of the disclosure, the first network device is the calculation network element, the second network device includes the RAN and AMF, the third network device is the storage network element, starting from the terminal (UE) that initiates a calculation service request, the process of the method for information processing provided in the embodiments of the disclosure may be shown in FIG. 11, and may specifically include the following steps.
1. The UE sends a calculation service request to the AMF via the RAN, in which the request includes an ID of the UE, a service ID, description information of the calculation service, and so on.
2. The AMF sends the calculation service request to the calculation network element.
3. The calculation network element determines an ID and resource information of a required algorithm based on the description information.
4. The calculation network element sends an algorithm query request to the DN via a GW.
5. The DN returns the algorithm to the calculation network element.
6. The calculation network element obtain a calculation result by using the corresponding algorithm to schedule computing resources for calculation.
7. The calculation network element sends the calculation result via the user plane to the storage network element for storage.
8. The storage network element integrates all calculation results related to the calculation service and unifies the format.
9a. The storage network element transparently sends the processed calculation result to the UE by the user plane via the AMF and RAN.
9b. After receiving the calculation result, the UE sends indication information to the storage module.

Corresponding to the method for information processing provided in the foregoing embodiments, the disclosure further provides an apparatus for information processing and a device. Since the apparatus for information processing provided in the embodiments of the disclosure corresponds to the method for information processing provided in the foregoing embodiments, the implementation manner of the method for information processing is also applicable to the apparatus for information processing and the device provided in the following embodiments, which is not described in detail here.

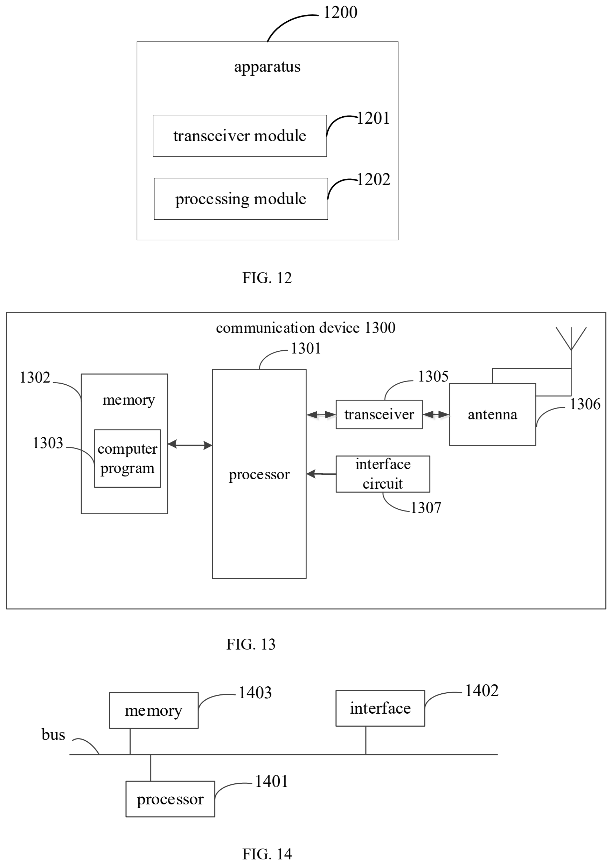

Referring to FIG. 12, it is a block diagram illustrating an apparatus according to an embodiment of the disclosure.

The apparatus 1200 illustrating in FIG. 12 may include a transceiver module 1201 and a processing module 1202. The transceiver module 1201 may include a transmitting module and/or a receiving module, the transmitting module is for realizing a transmitting function, and the receiving module is for realizing a receiving function, and the transceiver module may realize the transmitting function and/or the receiving function.

It may be understood that the apparatus 1200 may be a first network device, an apparatus in the first network device, or an apparatus that may be used in conjunction with the first network device side.

In the case that the apparatus 1200 may be configured on the first network device side, the transceiver module 1201 is configured to receive a first calculation service request sent by a terminal via a second network device, in which the first calculation service request includes an ID of the terminal and description information of a required calculation service; and the processing module 1202 is configured to determine an ID and resource information of a required algorithm of the terminal based on the description information, in which the resource information includes a resource type and/or a resource quantity. The processing module 1202 is further configured to obtain, based on the resource information, a first calculation result via an algorithm associated with the ID of the required algorithm. The transceiver module 1201 is further configured to send a processing request to a third network device, in which the processing request includes the ID of the terminal and the first calculation result.

Optionally, the transceiver module 1201 is further configured to send an algorithm acquisition request to a fourth network device, in which the algorithm acquisition request includes the ID of the required algorithm; and receive the algorithm sent by the fourth network device.

Optionally, the transceiver module 1201 is further configured to send the first calculation result to the terminal via the second network device.

Optionally, the first calculation service request and the processing request further include a first service ID.

Optionally, the processing module is further configured to, in a case that the first service request does not include a service ID and the first network device includes a second calculation service request associated with the ID of the terminal, determine a first service ID corresponding to the first calculation service request and a second service ID corresponding to the second calculation service request.

The apparatus in the embodiments, after receiving the first calculation service request sent by the terminal, may first determine the ID and the resource information of the required algorithm of the terminal, then obtain, based on the resource information, the first calculation result via the algorithm associated with the ID of the required algorithm, and send the first calculation result to the third network device. Thus, by using the independently deployed first network device within the network, independent calculation services are provided for the terminal, which improves the performance of the communication system.

It may be understood that the apparatus 1200 may be a third network device, an apparatus in the third network device, or an apparatus that may be used in conjunction with the third network device.

In the case that the apparatus 1200 may be configured on the third network device side, the transceiver module 1201 is configured to receive a processing request sent by a first network device, in which the processing request includes an ID of a terminal and a first calculation result, the processing request is configured to request at least one of: storing the first calculation result, or sending the first calculation result to the terminal; and the processing module 1202 is configured to process the first calculation result.

Optionally, the processing module 1202 is further configured to send the first calculation result to the terminal via a second network device, in which the processing request further includes an ID of the second network device. The transceiver module 1201 is further configured to receive an indication message sent by the terminal via the second network device, in which the indication message indicates that the terminal has obtained the first calculation result.

Optionally, the processing module 1202 is further configured to determine a reference format of the first calculation result based on the ID of the terminal; and obtain a second calculation result in the reference format by performing format conversion on the first calculation result. The transceiver module 1201 is further configured to send the second calculation result to the terminal via a second network device, in which the processing request further includes an ID of the second network device.

Optionally, the processing module 1202 is further configured to, in a case that stored data includes a third calculation result associated with the terminal, determine a first service ID associated with the first calculation result and a second service ID associated with the third calculation result. The transceiver module 1201 is further configured to send the first calculation result and the first service ID, the third calculation result and the second service ID to the terminal via the second network device, in which the processing request further includes the ID of the second network device.

Optionally, the processing request includes a first service ID.

Optionally, the transceiver module 1201 is further configured to receive a calculation result query request sent by the terminal via the second network device, in which the query request includes the ID of the terminal and the first service ID. The processing module 1202 is further configured to obtain the first calculation result associated with the ID of the terminal and/or the first service ID. The transceiver module 1201 is further configured to send the first calculation result to the terminal via the second network device.

In summary, after receiving the processing request sent by the first network device, the third network device may store the first calculation result sent by the first network device, and/or send the first calculation result to the terminal. Thus, by using the independently deployed third network device within the network, independent storage services of the calculation results are provided for the terminal, which improves the performance of the communication system.

It may be understood that the apparatus 1200 may be a terminal, an apparatus in the terminal, or an apparatus that may be used in conjunction with the terminal.

In the case that the apparatus 1200 may be configured on the terminal side, the transceiver module 1201 is configured to send a calculation service request to a first network device via a second network device, in which the first calculation service request includes an ID of the terminal and description information of a required calculation service. The transceiver module 1201 is further configured to receive, via the second network device, a calculation result sent by the first network device or a third network device, in which the calculation result is sent by the first network device to the third network device.

Optionally, the calculation service request further includes a service ID.

Optionally, the transceiver module 1201 is further configured to receive, via the second network device, a service ID associated with the calculation result sent by the first network device or the third network device.

In summary, the terminal first sends the calculation service request to the first network device via the second network device, and then receives, via the second network device, the calculation result sent by the first network device or the third network device. Thus, by using the independently deployed first network device and the third network device within the network, independent calculation services are provided for the terminal, which improves the performance of the communication system.

To implement the above embodiments, the embodiments of the disclosure further provide a communication device. The communication device includes a processor and a memory storing a computer program that, when executed by the processor, causes the communication device to implement the method shown in embodiments in FIG. 2 to FIG. 4.

To implement the above embodiments, the embodiments of the disclosure further provide a communication device. The communication device includes a processor and a memory storing a computer program that, when executed by the processor, causes the communication device to implement the method shown in embodiments in FIG. 5 to FIG. 8.

To implement the above embodiments, embodiments of the disclosure further provide a communication device. The communication device includes a processor and a memory storing a computer program that, when executed by the processor, causes the communication device to implement the method shown in embodiments in FIG. 9.

To implement the above embodiments, the embodiments of the disclosure further provide a communication device. The communication device includes a processor and an interface circuit, in which the interface circuit is configured to receive code instructions and transmit the code instructions to the processor; and the processor is configured to execute the code instructions to implement the method shown in embodiments in FIG. 2 to FIG. 4.

To implement the above embodiments, the embodiments of the disclosure further provide a communication device. The communication device includes a processor and an interface circuit, in which the interface circuit is configured to receive code instructions and transmit the code instructions to the processor; and the processor is configured to execute the code instructions to implement the method shown in embodiments in FIG. 5 to FIG. 8.

To implement the above embodiments, the embodiments of the disclosure further provide a communication device. The communication device includes a processor and an interface circuit, in which the interface circuit is configured to receive code instructions and transmit the code instructions to the processor; and the processor is configured to execute the code instructions to implement the method shown in embodiments in FIG. 9.

FIG. 13 is a block diagram illustrating another communication device according to an embodiment of the disclosure. The communication device 1300 may be a first network device, a third network device, a terminal, a chip, a system on chip or a processor that supports the first network device or the third network device to implement the above method, or a chip, a system on chip or a processor that supports the terminal to implement the above method. The communication device 1300 may be configured to implement the methods described in the method embodiments, which may refer to descriptions in the method embodiments.

The communication device 1300 may include one or more processors 1301. The processor 1301 may include a general purpose processor or a dedicated processor. For example, the processor may be a baseband processor or a central processor. The baseband processor may be configured to process a communication protocol and communication data, and the central processor may be configured to control a communication device (e.g., a network side device, a baseband chip, a terminal, a terminal chip, a DU or CU, etc.), to execute a computer program, and process data of the computer program.

Optionally, the communication device 1300 may further include one or more memories 1302 with a computer program 1303 stored. The computer program 1303 is executed so that the communication device 1300 performs the method as described in the above method embodiments. The computer program 1303 may be solidified in the processor 1301, in which case the processor 1301 may be implemented by hardware.

Optionally, the memory 1302 may further store data. The communication device 1300 and the memory 1302 may be independently configured or integrated together.

Optionally, the communication device 1300 may further include a transceiver 1305 and an antenna 1306. The transceiver 1305 may be referred to as a transceiving unit, a transceiver or a transceiving circuit, which may be configured to achieve a transceiving function. The transceiver 1305 may include a receiver and a transmitter. The receiver may be referred to as a receiving machine or a receiving circuit, etc., for implementing a receiving function; the transmitter may be referred to as a transmitting machine or a transmitting circuit, etc. for implementing a transmitting function.

Optionally, the communication device 1300 may further include one or more interface circuits 1307. The interface circuit 1307 is configured to receive code instructions and transmit the code instructions to the processor 1301. The code instructions are executed by the processor 1301 so that the communication device 1300 performs the method as described in the above method embodiments.

In an implementation, the processor 1301 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the communication device 1300 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a first network device, a third network device or a terminal, but the scope of the communication device described in the disclosure is not limited, and a structure of the communication device may not be limited by FIG. 12 to FIG. 13. The communication device may be a stand-alone device or may be a part of a larger device. For example, the communication device may be the following:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal device, a cellular phone, a wireless device, a handset, a mobile unit, a vehicle-mounted device, a network side device, a cloud device, an artificial intelligence device, etc.;
(6) others, and so forth.

In the case that the communication device may be a chip or a system on chip, a block diagram of a chip shown in FIG. 14 may be referred. The chip shown in FIG. 14 includes a processor 1401 and an interface 1402. There may be one or more processors 1401 and there may be a plurality of interfaces 1402.

In a case that the chip is configured to implement functions of the first network device in the embodiments of the disclosure, the interface 1402 is configured to receive code instructions and transmit the code instructions to the processor; and the processor 1401 is configured to execute the code instructions to implement the method in FIG. 2 to FIG. 4.

In a case that the chip is configured to implement functions of the third network device in the embodiments of the disclosure, the interface 1402 is configured to receive code instructions and transmit the code instructions to the processor; and the processor 1401 is configured to execute the code instructions to implement the method in FIG. 5 to FIG. 8.

In a case that the chip is configured to implement functions of the terminal in the embodiments of the disclosure, the interface 1402 is configured to receive code instructions and transmit the code instructions to the processor; and the processor 1401 is configured to execute the code instructions to implement the method in FIG. 9.

Optionally, the chip further includes a memory 1403, configured to save necessary computer program and data.

Those skilled in the related art may understand that, various illustrative logical blocks and steps listed in embodiments of the disclosure, may be implemented by electronic hardware, computer software or a combination of the electronic hardware and the computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

An embodiment of the disclosure further provides a communication system. The system includes the communication apparatus functioning as the terminal, the communication apparatus functioning as the first network side device, or the communication apparatus functioning as the third network side device in the aforementioned embodiment of FIG. 12, or the system includes the communication apparatus functioning as the terminal, the communication apparatus functioning as the first network side device, or the communication apparatus functioning as the third network side device in the aforementioned embodiment of FIG. 13.

A readable storage medium with instructions stored is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of the embodiments of the disclosure, but also to indicate an order of precedence.

The phase "at least one" in the disclosure may also be described as one or more, and the phase "a plurality of" may refer to two, three, four or more, which is not limited in the disclosure. In the embodiments of the disclosure, for a kind of technical feature, technical features in the kind of technical feature are distinguished by "first", "second", "third", "A", "B", "C" and "D", and there is no order of precedence or magnitude between the technical features described in "first", "second", "third", "A", "B", "C" and "D".

Corresponding relationships indicated by tables in the disclosure may be configured or predefined. A value of information in the tables is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by the hardware or the software depends on a specific application and a design constraint of the technical solution. Those skilled in the art may adopt different methods for each specific application to implement the described functions, but such implementation should not be considered as going beyond the scope of the disclosure.

Those skilled in the art may clearly understand that, a specific working process of a system, an apparatus and a unit described above may refer to a corresponding process in the above method embodiments, which will not be repeated here.

It should be understood that the various forms of processes shown above can be used to reorder, add or delete steps. For example, the steps described in embodiments of the disclosure may be performed in parallel, sequentially, or in a different order, as long as the desired result of the technical solution disclosed in the invention is achieved, which is not limited in the disclosure.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for information processing, performed by a first network device, comprising:
receiving a first calculation service request sent by a terminal via a second network device, wherein the first calculation service request comprises an identifier of the terminal and description information of a required calculation service;
determining an identifier and resource information of a required algorithm of the terminal based on the description information, wherein the resource information comprises a resource type and/or a resource quantity;
obtaining, based on the resource information, a first calculation result via an algorithm associated with the identifier of the required algorithm; and
sending a processing request to a third network device, wherein the processing request comprises the identifier of the terminal and the first calculation result.

2. The method according to claim 1, further comprising:
sending an algorithm acquisition request to a fourth network device, wherein the algorithm acquisition request comprises the identifier of the required algorithm; and
receiving the algorithm sent by the fourth network device.

3. The method according to claim 1, further comprising:
sending the first calculation result to the terminal via the second network device.

4. The method according to any one of claims 1 to 3, wherein the first calculation service request and the processing request further comprise a first service identifier.

5. The method according to any one of claims 1 to 3, further comprising:
in a case that the first service request does not comprise a service identifier and the first network device comprises a second calculation service request associated with the identifier of the terminal, determining a first service identifier corresponding to the first calculation service request and a second service identifier corresponding to the second calculation service request.

6. A method for information processing, performed by a third network device, comprising:
receiving a processing request sent by a first network device, wherein the processing request comprises an identifier of a terminal and a first calculation result, the processing request is configured to request at least one of: storing the first calculation result, or sending the first calculation result to the terminal; and
processing the first calculation result.

7. The method according to claim 6, wherein processing the first calculation result comprises:
sending the first calculation result to the terminal via a second network device, wherein the processing request further comprises an identifier of the second network device; and
receiving an indication message sent by the terminal via the second network device, wherein the indication message indicates that the terminal has obtained the first calculation result.

8. The method according to claim 6, wherein processing the first calculation result comprises:
determining a reference format of the first calculation result based on the identifier of the terminal;
obtaining a second calculation result in the reference format by performing format conversion on the first calculation result; and
sending the second calculation result to the terminal via a second network device, wherein the processing request further comprises an identifier of the second network device.

9. The method according to any one of claims 6 to 8, further comprising:
in a case that stored data comprises a third calculation result associated with the terminal, determining a first service identifier associated with the first calculation result and a second service identifier associated with the third calculation result; and
sending the first calculation result, the first service identifier, the third calculation result and the second service identifier to the terminal via the second network device, wherein the processing request further comprises the identifier of the second network device.

10. The method according to any one of claims 6 to 8, wherein the processing request comprises a first service identifier.

11. The method according to claim 9 or 10, further comprising:
receiving a calculation result query request sent by the terminal via the second network device, wherein the query request comprises the identifier of the terminal and the first service identifier;
obtaining the first calculation result associated with the identifier of the terminal and/or the first service identifier; and
sending the first calculation result to the terminal via the second network device.

12. A method for information processing, performed by a terminal, comprising:
sending a calculation service request to a first network device via a second network device, wherein the first calculation service request comprises an identifier of the terminal and description information of a required calculation service; and
receiving, via the second network device, a calculation result sent by the first network device or a third network device, wherein the calculation result is sent by the first network device to the third network device.

13. The method according to claim 12, wherein the calculation service request further comprises a service identifier.

14. The method according to claim 12, further comprising:
receiving, via the second network device, a service identifier associated with the calculation result sent by the first network device or the third network device.

15. A first network device, comprising:
a transceiver module, configured to receive a first calculation service request sent by a terminal via a second network device, wherein the first calculation service request comprises an identifier of the terminal and description information of a required calculation service; and
a processing module, configured to determine an identifier and resource information of a required algorithm of the terminal based on the description information, wherein the resource information comprises a resource type and/or a resource quantity;
wherein the processing module is further configured to obtain, based on the resource information, a first calculation result via an algorithm associated with the identifier of the required algorithm; and
the transceiver module is further configured to send a processing request to a third network device, wherein the processing request comprises the identifier of the terminal and the first calculation result.

16. A third network device, comprising:
a transceiver module, configured to receive a processing request sent by a first network device, wherein the processing request comprises an identifier of a terminal and a first calculation result, the processing request is configured to request at least one of: storing the first calculation result, or sending the first calculation result to the terminal; and
a processing module, configured to process the first calculation result.

17. A terminal, comprising:
a transceiver module, configured to send a calculation service request to a first network device via a second network device, wherein the first calculation service request comprises an identifier of the terminal and description information of a required calculation service;
wherein the transceiver module is further configured to receive, via the second network device, a calculation result sent by the first network device or a third network device, wherein the calculation result is sent by the first network device to the third network device.

18. A communication device, comprising a processor and a memory storing a computer program that, when executed by the processor, causes the communication device to implement the method according to any one of claims 1 to 5, the method according to any one of claims 6 to 11, or the method according to any one of claims 12 to 14.

19. A communication device, comprising: a processor and an interface circuit; wherein
the interface circuit is configured to receive code instructions and transmit the code instructions to the processor; and
the processor is configured to execute the code instructions to implement the method according to any one of claims 1 to 5, the method according to any one of claims 6 to 11, or the method according to any one of claims 12 to 14.

20. A communication system, comprising: a first network device, a third network device, and a terminal device;
wherein the first network device is configured to perform the method according to any one of claims 1 to 5;
the third network device is configured to perform the method according to any one of claims 6 to 11; and
the terminal device is configured to perform the method according to any one of claims 12 to 14.

21. A computer-readable storage medium storing instructions that, when executed, cause the method according to any one of claims 1 to 5, the method according to any one of claims 6 to 11, or the method according to any one of claims 12 to 14 to be implemented.
